# EUROPEAN PATENT APPLICATION

(11) **EP 2 962 540 A1**
(43) Date of publication of application: **06.01.2016**
(21) Application number: 14425088.3
(22) Date of filing: 30.06.2014
(51) Int. Cl.: A01D 57/20, A01D 84/00

(54) **Improved assembly for the movement and transport of agricultural products**

(71) Applicant: I.G. S.R.L., 48026 Russi (RA) (IT)
(72) Inventor: Ravaglia, Paolo, 48012 Bagnacavallo RA (IT)
(74) Representative: Modiano, Micaela Nadia

(57) **Abstract**

An improved assembly for the movement and transport of agricultural products, of the type of grass, hay, forage, grain, maize, and the like, cut and distributed on the ground, comprising a chassis (2) that can be coupled to a drive unit (B) and is associated with elements for lifting and placing (3) the agricultural products onto at least one conveyor belt (4), which in turn faces and is proximate to the elements (3). This makes it possible to move the agricultural products in an operating direction (C), which is substantially transverse with respect to the predefined advancement direction (D), and deposit them in a predefined region (E). The chassis (2) is functionally associated with means for varying (5) the position of the entire belt (4) along the operating direction (C), in order to move it between at least one first configuration, in which the belt (4) substantially faces the elements (3) over its entire length, and at least one second configuration, in which an end portion (4a) of the belt (4) protrudes externally from the transverse space occupation of the elements (3).

The assembly comprises at least one movable auxiliary pick-up drum (6), which faces the end portion (4a) and is adjacent to the elements (3) in at least one working position thereof, in turn for lifting the agricultural products and delivering them to the end portion (4a) of the conveyor belt (4), in the second configuration of the belt (4).

## Description

The present invention relates to an improved assembly for the movement and transport of agricultural products.

As is known, in agriculture, and more specifically in the zootechnical sector, a role of primary importance is accorded to the activity of harvesting grass or other agricultural products (wheat, maize, hay, etc.) for use as forage, and therefore for animal feed.

Companies in the sector therefore deploy a large amount of resources in order to accomplish such aim, in a trend that in recent years has been leaning toward a production of high quality feedstuffs and foods, which are necessary in order to ensure the desired yield of the animals and to meet increasingly stringent regulations and standards.

The harvest of agricultural products therefore involves, according to methods that are now consolidated, the agricultural product, which was previously cut and left on the ground in piles of various sizes (which are sometimes redistributed in a more homogeneous manner by an adapted machine called a "tedder"), being subsequently amassed in parallel strips (called "windrows") up to two meters wide.

Agricultural vehicles can move along the windrows to press (for example roto-balers and the like) and/or gather (for example loader wagons and self-propelled foragers) the agricultural products, which then undergo the treatments and processes necessary for the formation of bales, silage, etc., later making them available for feeding animals.

In order to arrange the grass into windrows, for some time agricultural machines have been used, towed by respective tractors, which are of the stellar type, i.e. they are provided with two or more rotors which, thanks to a roto-translational movement, drag the agricultural product on the ground until it is amassed along the desired strips.

Such type of machine has however been found to be unsatisfactory, in that the unavoidable dragging of the metallic teeth of the rotors on the ground (owing to the irregularity of the latter) results in the unwanted mixing of the agricultural product with soil and other impurities, which compromises the quality thereof. Moreover, the compression thrust that the tooth exerts on the agricultural product, in order to move it, sometimes causes the deterioration and/or separation of the leaf, which is rich in proteinic substances but is also very fragile.

Instead of such implementation solutions, increasingly often other machines are therefore preferred, which are equipped with pick-up drums that are constituted by teeth that rotate about an axis parallel to the ground and perpendicular to the advancement direction, in order to lift the agricultural product upward, and deposit it to the rear, where a pair of conveyor belts move which are parallel to the rotation axis of the teeth and mutually aligned.

By conveniently selecting the direction of travel, the belts can thus deposit the grass on one or both sides of the machine, thus providing two parallel windrows; furthermore, by mutually spacing them apart, the belts can also form a single, central windrow, progressively unloading the grass in the central space comprised between them, along the path of advancement of the machine.

In such context, on April 8, 2013, the applicant filed European patent application number 13425050.5. In such application a machine is described that is capable of forming windrows according to the principle of operation just explained and that has, in an entirely innovative manner, conveyor belts that can vary their position (along their direction of sliding) with respect to the corresponding rows of rotating teeth.

Such solution makes it possible to increase the number of operating configurations, each one of which corresponds to a different arrangement of the windrow (or windrows) formed with respect to the machine. More precisely, such solution makes it possible for example to mutually space apart the belts only, in order to provide the central windrow, while the rows of teeth, in mutual alignment, are kept in contact. This makes it possible to retrieve and move the entire mass of grass that is distributed on the ground, thus solving the problem that affects the conventional solutions described above, in which, since the teeth are mutually spaced apart as are the belts, the central windrows were formed partially from grass that had been moved and partially from grass that had not been touched (thus obtaining bales or silage of lower quality).

Such implementation solution is also, however, not devoid of drawbacks.

In fact, when the belts are mutually spaced apart, while the mutually aligned rows of teeth are kept in contact, the external end portion of each belt protrudes in a cantilever manner from the respective row of teeth.

Therefore, during the advancement along the ground, such end portion directly faces the cut agricultural products (which are waiting to be picked up) without the interposition of one or more pick-up teeth.

It thus sometimes happens that this same external end portion encounters accumulations or tangles of grass along the path, which, since they cannot be moved by the teeth, are not lifted and deposited on the belt, but instead collect and build up against the frame of the latter, causing jams that force the operator who is driving to make frequent unwanted stops.

The aim of the present invention is to solve the above-mentioned problems, by providing an improved assembly that is versatile and highly productive, that effectively makes it possible to move the entire mass of previously-cut agricultural products, and convey them into windrows that are arranged variously with respect to the advancement direction.

Within this aim, an object of the invention is to provide an improved assembly that makes it possible to form central windrows, arranged along the advancement direction, without incurring frequent jams.

Another object of the invention is to provide an improved assembly that is well balanced, and thus capable of ensuring an optimal operation, and high productivity, even in proximity to ditches and on appreciably uneven terrain.

Another object of the invention is to provide an assembly that ensures high reliability of operation and can be easily moved on urban or suburban roads.

Another object of the invention is to provide an assembly that can be easily implemented using elements and materials that are readily available on the market.

Another object of the invention is to provide an assembly that is low-cost and safe in application.

This aim and these objects are achieved by an improved assembly for the movement and transport of agricultural products, of the type of grass, hay, forage, grain, maize, and the like, cut and distributed on the ground, comprising a chassis that can be coupled to a drive unit and is associated with elements for lifting and placing the agricultural products onto at least one conveyor belt, which faces and is proximate to said elements, in order to move the agricultural products according to an operating direction, which is substantially transverse to the predefined advancement direction, and deposit them in a predefined region, said chassis being functionally associated with means for varying the position of the entire belt along said operating direction, in order to move it between at least one first configuration, in which said belt substantially faces said elements over its entire length, and at least one second configuration, in which an end portion of said belt protrudes externally from the transverse space occupation of said elements, characterized in that it comprises at least one movable auxiliary pick-up drum, which faces said end portion and is adjacent to said elements in at least one working position thereof, for lifting the agricultural products and delivering them to said end portion of said conveyor belt, in said second configuration of said belt.

Further characteristics and advantages of the invention will become more apparent from the description of a preferred, but not exclusive, embodiment of the improved assembly according to the invention, which is illustrated by way of non-limiting example in the accompanying drawings wherein:
Figure 1 is a perspective view from the left, and seen from behind, with respect to the advancement direction, of the improved assembly according to the invention;

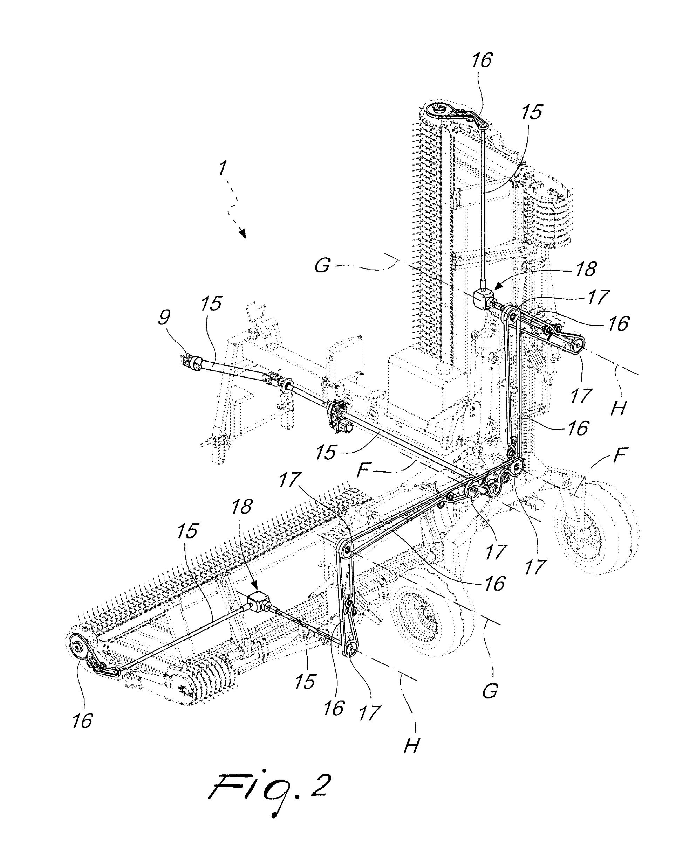

Figure 2 is the same view as in Figure 1, with the assembly shown in dotted lines, in order to highlight some components, which are shown in unbroken lines;
Figure 3 is a perspective view from the right, and seen from behind, with respect to the advancement direction, of the improved assembly in Figure 1;

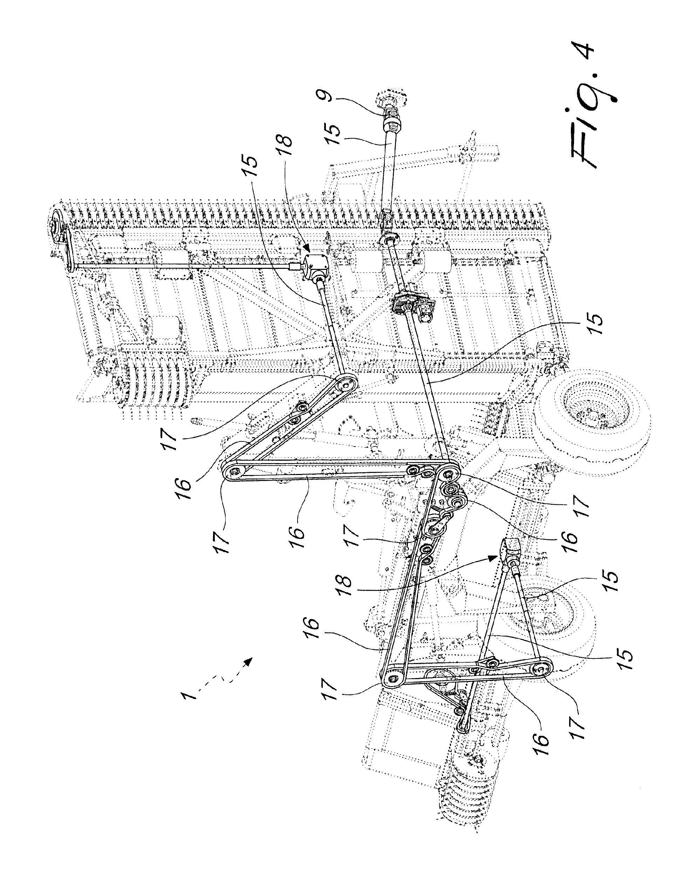

Figure 4 is the same view as in Figure 3, with the assembly shown in dotted lines, in order to highlight some components, which are shown in unbroken lines;
Figures 5 and 6 are perspective views of the movement of the movable auxiliary pick-up drum;
Figure 7 is a greatly enlarged detail of the improved assembly according to the invention, seen from behind, with respect to the advancement direction;
Figures 8 and 9 are views from above of two possible working conditions of the improved assembly according to the invention, towed by a drive unit.

With particular reference to the figures, the reference numeral 1 generally designates an improved assembly for the movement and transport of agricultural products, of the type of grass, hay, forage, grain, maize, and the like, (previously) cut and distributed on the ground (on a piece of agricultural land for example).

More precisely, in the preferred application the assembly 1 is intended to move and convey grass, after it has been cut or mown, so as to amass it, according to the methods that will be explained below, in ordered rows (called "windrows" A). The ordered distribution thus obtained in fact enables a quicker and easier pickup of the grass, by other agricultural machines, according to specific requirements and to the treatments which it will undergo.

In this regard, it should be noted for example that the pickup of the grass (or other agricultural product) can enable its subsequent compression into bales or silage, and its consequent (preferred but not exclusive) use in the zootechnical sector, as feed for the animals; the possibility is not ruled out however of using the assembly 1 for different aims and/or types of agricultural products as well, according to specific requirements, while remaining within the scope of protection claimed herein.

In any case, the assembly 1 comprises a chassis 2 that can be coupled to a drive unit B (a tractor or similar vehicle, for example), according to conventional methods, in order to be towed along the surface of interest.

The chassis 2 is associated with elements for lifting and placing 3 agricultural products at at least one conveyor belt 4, which faces and is proximate to said elements 3.

The conveyor belt 4, arranged substantially to the rear of the elements 3, receives from them the agricultural products in order to then move them in to an operating direction C, which is substantially transverse to the predefined advancement direction D (of the assembly 1 and of the drive unit B), and thus be able to deposit them in a predefined region E, in order to progressively form the windrow A (or windrows A).

The belt 4 can vary the direction of sliding at will, so as to be able to freely choose on which side, with respect to the belt 4, to form the windrow A.

Furthermore, the chassis 2 is functionally associated with means 5 of varying the position of the entire belt 4 along the operating direction C.

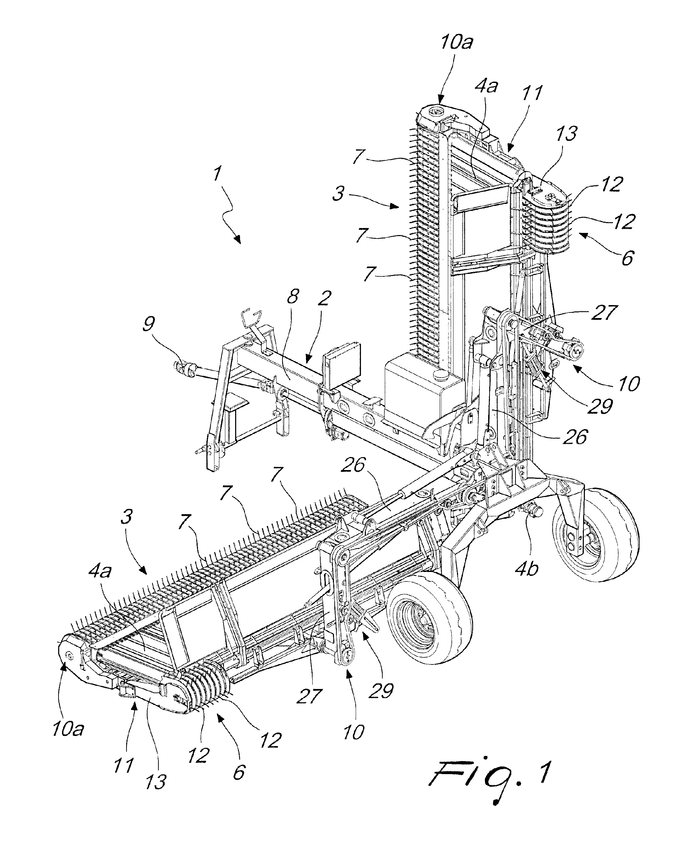

The means 5 ensure that it is possible to move the belt 4 between a first configuration, in which it substantially faces the elements 3 over its entire length (as in Figure 1 for example), to at least one second configuration, and vice versa.

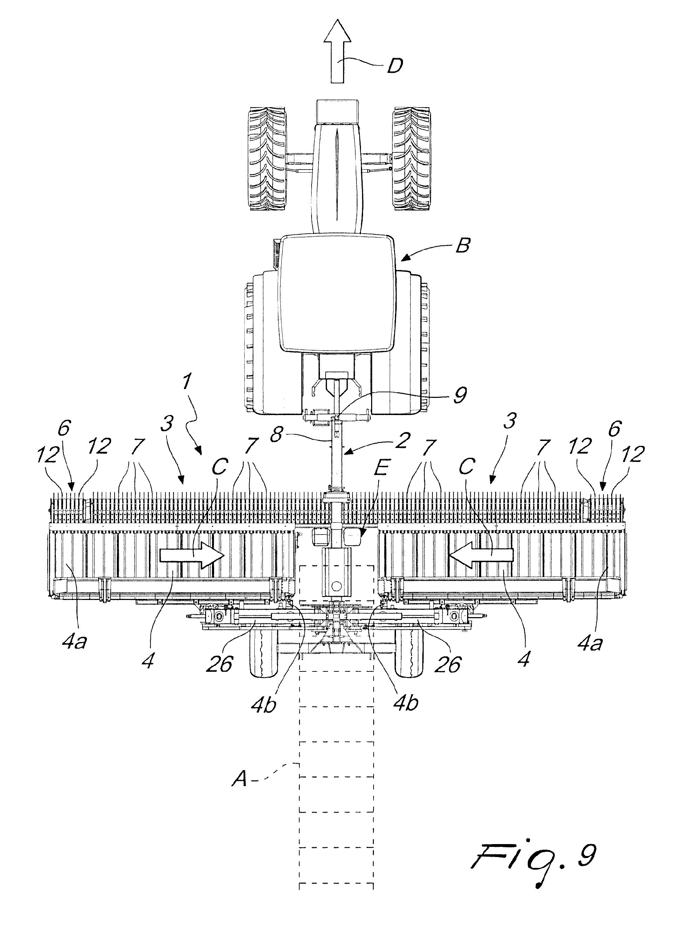

In the second configuration, which is arrived at by varying the position of the entire belt 4 (i.e. by making it perform a translational motion in the operating direction C) with respect to the elements 3, an end portion 4a of the belt 4 protrudes from the transverse space occupation of the elements 3 (as in Figure 9 for example) and thus directly faces the ground and any agricultural products that it encounters along the path (i.e., without the interposition of the elements 3).

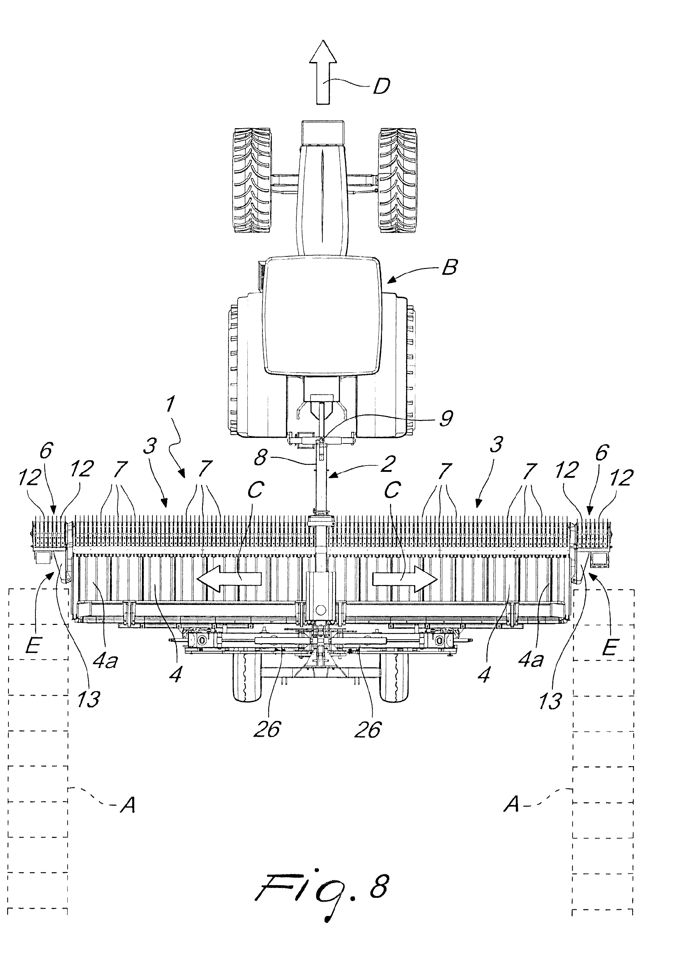

According to the invention, the improved assembly 1 comprises at least one movable auxiliary pick-up drum 6, which faces the end portion 4a and is adjacent to the elements 3 in at least one working position thereof (in which the pick-up drum 6 is shown for example in Figures 8 and 9).

Thus, when the movable auxiliary pick-up drum 6 is in such working position, it can in turn lift the agricultural products, in order to deliver them to the end portion 4a of the conveyor belt 4, in the second configuration of the belt 4.

It should be noted from this point onward that the presence of the pick-up drum 6 makes it possible to intercept, lift and deliver onto the belt 4 (at its end portion 4a) those agricultural products that would otherwise come directly into contact with the belt 4 (the end portion 4a) or its supporting elements, without the possibility of being handled by the elements 3.

So in fact, in such situation, the active condition typical of the more traditional type of machines is restored, in which externally the belt is substantially aligned with the devices that are used to pick up the grass, and this guards against the danger that excessive masses or tangles of agricultural products, by accumulating against the end portion 4a of the belt 4, could cause malfunctions or jams (as by contrast happens with the conventional solutions, when the belt 4 is arranged in a cantilever fashion with respect to the elements 3, as they are in the second configuration mentioned above).

More specifically, in the preferred, but not limiting, embodiment of the application of the invention, the lifting and placing elements 3 comprise at least one row of first teeth 7 which are mutually aligned and rotate, which row is parallel to the operating direction C, in order to lift (upward) the agricultural products and deliver them (rearward) to the belt 4.

The choice to use elements 3 of the type described above, which cooperate with the belt 4, makes it possible to move and convey the grass toward the windrow A being formed, without having to drag the grass along the ground (as in some conventional solutions), and thus guarding against the danger of contamination or of deterioration, which would compromise the quality of the feedstuff obtained.

According to an embodiment of important practical interest, which is shown schematically in the accompanying figures for the purposes of non-limiting example of the application of the invention, the improved assembly 1 according to the invention comprises two conveyor belts 4, which are mutually aligned along the operating direction C (and preferably are actuated by respective hydraulic motors 4b). Each belt 4 thus faces and is proximate to a respective row of first teeth 7, which are mutually aligned and rotate, and each belt 4 and the respective row of first teeth 7 are associated with a corresponding movable auxiliary pick-up drum 6.

So in fact, in a first possible embodiment, the improved assembly 1 has a single belt 4, and a respective row of first teeth 7: by choosing conveniently the direction of travel of the belt 4, it is thus possible to form a windrow A that is arranged at one of the two margins of the belt 4.

In the preferred embodiment, thanks to the use of two belts 4 and at least two rows of first teeth 7 (or even more, mutually parallel, rows for each belt 4), the improved assembly 1 is capable of collecting previously-cut grass from a wider portion of ground and, by varying at will the direction of travel of the belts 4, during the advancement of the assembly 1 it is possible to form two windrows A simultaneously (outside the belts 4), or one single, central windrow A, substantially along the axis of symmetry of the improved assembly 1 (which instant by instant coincides with the advancement direction D), by letting the agricultural products fall in a predefined region E which in this case in fact coincides with the gap between the two belts 4, which are conveniently spaced apart.

In the present discussion therefore reference will be made predominantly to the embodiment that has two belts 4, while reiterating that the possibility is not excluded of providing assemblies 1 that have a single belt 4.

It should likewise be noted that each belt 4 cooperates preferably with a plurality of rows of first teeth 7, which are mutually parallel and rotate along the same path (and parallel to the operating direction C).

With further reference to the embodiment, and as can be seen in the accompanying figures, the chassis 2 comprises a carriage 8 that can be directly coupled to the drive unit B, in order to allow the towing of the assembly 1 along the piece of agricultural land (or even the transfer to it, before beginning the activity of forming the windrows A), and which supports a power take-off 9, which in turn can be associated (according to conventional methods) with the drive unit B.

At the other end, the carriage 8 is functionally associated with respective structures 10 for supporting the belts 4, the corresponding elements 3 and the corresponding pick-up drums 6: each supporting structure 10 comprises at least one first shaft 10a that rotates in parallel to the operating direction C and supports, directly or indirectly (for example by way of the interposition of flanges and cams), a respective row of first teeth 7.

According to the methods that will be explained below, each first shaft 10a receives the motion from the power take-off 9 and makes the respective rows of first teeth 7 rotate, in order to be capable of lifting and delivering the grass to the belts 4 (which can slide thanks to the motors 4b).

With further reference to the preferred embodiment, the movable auxiliary pick-up drum 6 comprises a supporting frame 11 for at least one row of second rotating teeth 12 (and, preferably, for a plurality of rows of second teeth 12, in a manner similar to what is described above for the rows of first teeth 7).

Conveniently, the frame 11 is rotatably coupled to the supporting structure 10, in order to allow the selective movement of the pick-up drum 6 from the working position described above to a resting position, and vice versa.

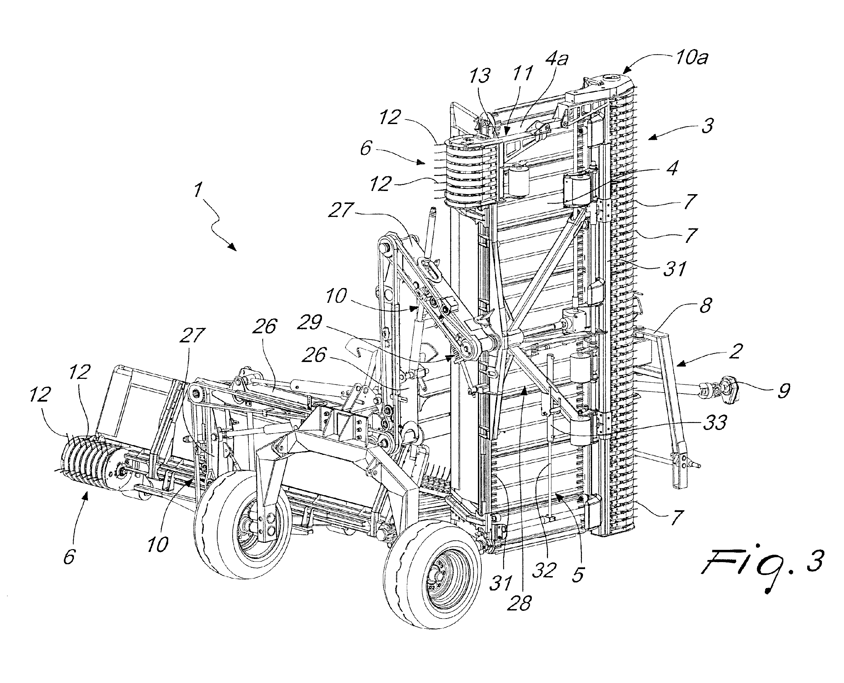

In the resting position (in which the pick-up drums 6 are shown for example in Figures 1 and 3), each pick-up drum 6 is arranged to the rear of the respective belt 4 and of the corresponding row of first teeth 7.

It should be noted moreover that the pick-up drum 6 is designed and dimensioned so that, in the working position, the rows of second teeth 12 are aligned with respective rows of first teeth 7, but preferably each pick-up drum 6 will be designed so that the respective rows of second teeth 12 are staggered with respect to the corresponding rows of first teeth 7, since this ensures an optimal operation of the improved assembly 1.

When the belt 4 is in the first configuration, and thus the end portion 4a does not protrude externally with respect to the respective row of first teeth 7, as can be seen in Figure 8 the pick-up drum 6 can thus be selectively kept in the working position, if it is desired to widen the band of terrain covered by the operation of the assembly 1 (and in particular of the elements 3 and/or of the pick-up drums 6), or in the resting position, if it is preferred to pick up and convey a smaller quantity of grass.

In particular, the supporting frame 11 of the pick-up drum 6 comprises a contoured arm 13, which is pivoted with one of its end portions to the structure 10 (to a component thereof) and which rotatably supports, at the other end, a second rotating shaft 14, which supports, directly or indirectly, the row (or rows) of second teeth 12 of the movable auxiliary pick-up drum 6.

The transition from the working position to the resting position, and vice versa, is thus obtained with the rotation (by 180°) of the contoured arm 13, about its end portion which is pivoted to the structure 10.

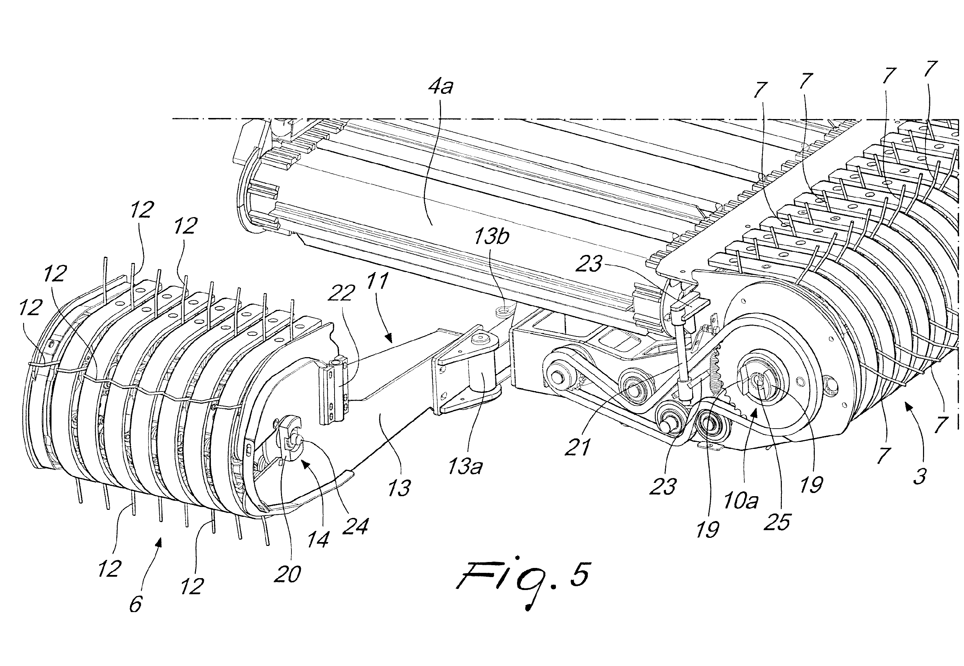

It should be noted that the possibility exists of coupling the contoured arm 13 to the structure 10 by way of a single rotatable articulation, but preferably, and as can be seen for example in Figure 5, the contoured arm 13 is associated with the structure 10 by two hinges 13a, 13b, with parallel axes. While not ruling out the possibility of using different additional kinetic mechanisms, the specific selected embodiment makes it possible to appreciably reduce the space occupation when the pick-up drum 6 is in the resting position.

Advantageously, the improved assembly 1 comprises an apparatus for the mechanical transmission of the power dispensed by the drive unit B: such apparatus thus comprises a plurality of intermediate transmission shafts 15, which are interposed between the power take-off 9 and at least each first shaft 10a, in order to cause its rotation in parallel to the operating direction C (and thus the movement of the rows of first teeth 7). Such intermediate shafts 15 are mutually coupled by respective transmission joints and/or belts 16, which are wound around respective pulleys 17 supported by the intermediate shafts 15, and/or bevel gears 18.

Conveniently, the mechanical transmission apparatus also comprises at least one coupling, which can be actuated automatically when the respective pick-up drum 6 reaches the working position, in order to provide the rigid connection between the first shaft 10a which supports the row (or rows) of first teeth 7 and the corresponding second shaft 14 which supports the row (or rows) of second teeth 12.

Such choice ensures high structural simplicity and low cost, in that it makes it possible to transmit power to each pick-up drum 6 (in order to move the second teeth 12) without having to resort to a further, independent motor device, instead taking advantage of the kinematic chain that is already responsible for the movement of the first teeth 7, and is actuated by the drive unit B.

More specifically, each coupling comprises at least one crest 19, which protrudes axially from the head of the first shaft 10a, directed outward. When the respective pick-up drum 6 reaches the working position, at least one portion of the lateral surface of the crest 19 abuts against a shoulder 20 that protrudes from the respective second shaft 14. Thus, when the first shaft 10a is caused to rotate, it automatically entrains the second shaft 14 in rotation, in that in fact the crest 19 and the shoulder 20 provide a coaxial connection.

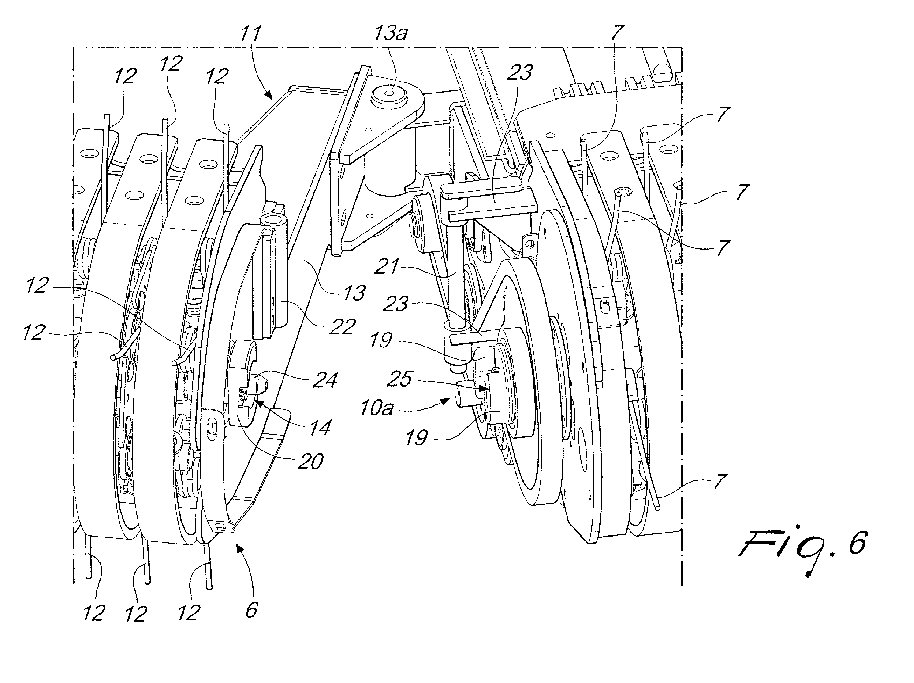

It should be noted that in the preferred embodiment, and as can be seen in Figures 5 and 6, each coupling (responsible for the connection between a first shaft 10a and a respective second shaft 14) comprises two crests 19 which can abut on opposite sides against the shoulder 20.

Furthermore, and with further reference to Figures 5 and 6, the coupling comprises at least one transverse pin 21, which is usually coupled to the supporting structure 10 and can be stably inserted, upon reaching the working position, by the respective pick-up drum 6, into a respective sheath 22, which is rigidly supported by the latter.

In fact, the transverse pin 21 can be externally supported in a cantilever manner by respective brackets 23 which protrude from the supporting structure 10: when the operator is preparing to move the pick-up drum 6 from the resting position to the working position, he or she can temporarily disengage it from the brackets 23, in order to then insert it into the sheath 22 (at the same time recoupling it to the brackets 23, which face it) when the pick-up drum 6 reaches the working position.

Thus, while the crests 19 with the shoulder 20 ensure the transmission of the motion and the axial connection, the transverse pin 21 guards against the danger of accidental counter-rotation of the contoured arm 13 with consequent detachment of the pick-up drum 6, and more generally it ensures the rigid coupling between the elements of the structure 10 that support the belt 4 and the respective pick-up drum 6 (as long as the operator wishes to maintain the latter in the working position).

Moreover, the possibility is not ruled out of substituting the transverse pin 21 with other, similar solutions (which may be remotely controlled), for example by using a hydraulic cylinder, in substitution for the transverse pin 21.

It should be noted that preferably the coupling between the crests 19 and the shoulder 20 is achieved with play, in order to facilitate the mutual joining and simplify the structure; therefore, the coupling comprises a central pivot 24, which protrudes axially from the second shaft 14.

Thus, when the pick-up drum 6 reaches the working position, the central pivot 24 can be automatically inserted into a respective orifice 25 that is provided along the previously mentioned head (between the crests 19), coaxially with the first shaft 10a, in order to ensure the centering of the second shaft 14 with respect to the first shaft 10.

Advantageously, the carriage 8 is functionally associated with each supporting structure 10 by way of respective supporting arms 26, which are pivoted to the carriage 8 and which rotate, about a first rotation axis F that is parallel to the advancement direction D.

This makes it possible to move the respective belt 4, the corresponding row of first teeth 7 and the corresponding pick-up drum 6 from an arrangement that is substantially horizontal and proximate to the ground, for the lifting, movement and depositing in the predefined region E of agricultural products, to an arrangement that is substantially raised, in order to contain the overall space encumbrance, and vice versa.

In fact, when the assembly 1 is operating to pick up agricultural products, the supporting arm 26 maintains the horizontal arrangement proximate to the ground, in which the belt 4 can be arranged in the first configuration or in the second, in order to form the windrows A in the various possible ways.

Vice versa, in the raised arrangement, in which the supporting arms 26 can be kept substantially vertical (proximate to the axis of symmetry of the assembly 1), the vertical space occupation is evidently appreciably contained and this allows travel on urban and suburban roads, while observing the Highway Code.

It should moreover be noted that the independent movement of each belt 4, and of the elements 3, makes it possible to use the improved assembly 1 in further, "intermediate" operating conditions, in which one belt 4, the respective rows of first teeth 7 and the corresponding pick-up drum 6 are proximate to the ground, while the other belt 4, the respective rows of first teeth 7 and the corresponding pick-up drum 6 are substantially vertical and proximate to the central axis of symmetry.

It should likewise be noted that, when the corresponding supporting arm 26 is raised, and thus the respective pick-up drum 6 is spaced from the ground, preferably the latter can be kept in the resting position.

Advantageously, in the preferred, but not exclusive, embodiment, each supporting structure 10 comprises a profiled element 27, articulated to the respective supporting arm 26 about a second rotation axis G, which is substantially parallel to the first rotation axis F.

At the other end the profiled element 27 is rotatably coupled, about a third rotation axis H, which is substantially parallel to the second rotation axis G (and naturally to the first), to a reticular framework 28 for supporting the respective first shaft 10a and the corresponding second shaft 14.

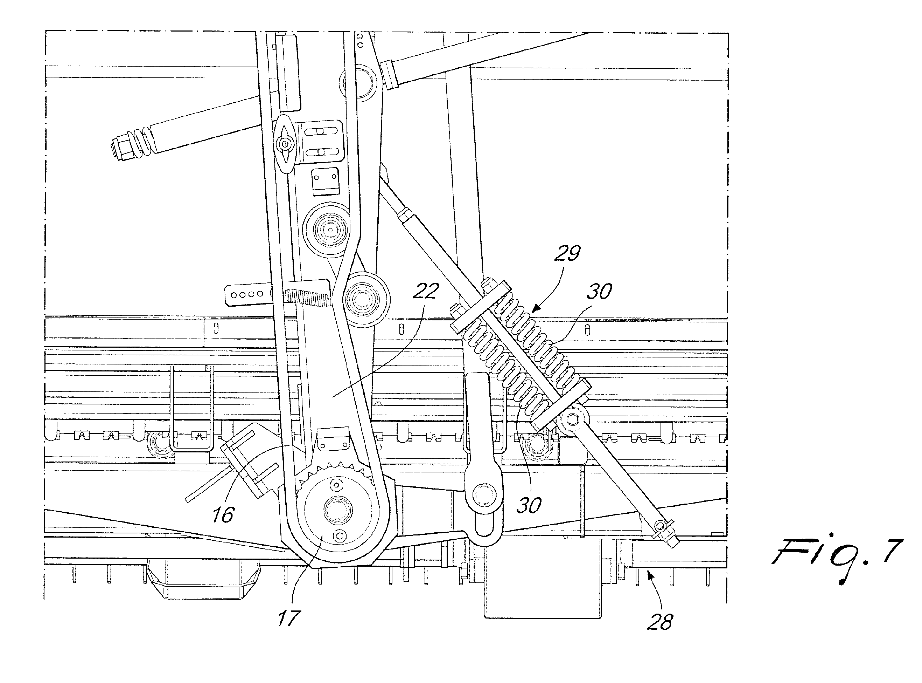

Positively, as is clearly shown for example in Figure 7, an elastic element 29 is interposed between each profiled element 27 and the respective framework 28: in this manner, the elastic reaction of the elastic element 29 opposes any free rotation of the framework 28 about the third axis H, due to the weight of the pick-up drum 6, which otherwise could unbalance the belt 4 and the elements 3.

In particular, and with further reference to Figure 7, the elastic element 29 is constituted substantially by at least one compression spring 30 (and for example by two springs 30 arranged in parallel), which is fixed at one of its ends to the respective profiled element 27 and, at the other end, to the corresponding framework 28, at the end opposite to the corresponding pick-up drum 6.

Thus, when the weight of the pick-up drum 6 tends to unbalance the respective framework 28, with the corresponding belt 4 and the respective elements 3 (as can occasionally happen, especially when the assembly 1 travels over uneven terrain and/or in the immediate vicinity of a ditch), the rotation of the framework 28 about the third rotation axis H causes a compression of the spring 30 (or of the springs 30), and the elastic reaction that develops thus restores the correct orientation, by compensating the unbalance.

Conveniently, the framework 28 of each supporting structure 10 defines a pair of guide rails 31 for the respective belt 4, which are arranged according to the operating direction C. The variation means 5 thus comprise at least one corresponding piston 32 which is rigidly coupled to the corresponding belt 4 and can slide along a guide cylinder 33, parallel to the respective rails 31, and is fixed, at the end opposite to the piston 32, to the framework 28.

In this manner, the sliding of the piston 32 along the guide cylinder 33 automatically causes the variation of the position of the belt 4 with respect to the corresponding rows of first teeth 7 and thus moves the belt 4 between the first configuration, in which, as has been seen, it faces the respective elements 3 over its entire length, and the second configuration, in which the end portion 4a protrudes externally from the transverse space occupation of the elements 3.

The operation of the improved assembly according to the invention is as follows.

When each belt 4 and the respective rows of first teeth 7 are arranged substantially horizontal and proximate to (resting on) the ground, both with the belt 4 in the first configuration and in the second, the improved assembly 1 (towed by the drive unit B) is capable of lifting, moving and depositing in the predefined region E the previously-cut agricultural products that it progressively encounters and which are distributed randomly over the surface of interest.

As partially anticipated in the previous paragraphs, by varying the position and the direction of travel of the belts 4 it is possible to modify the placement of the windrow A being formed, or of the windrows A, with respect to the assembly 1 and to the path traveled by it.

For example, by keeping the belts 4 close together (as in Figure 8) and the respective rows of first teeth 7 in mutual contact, and by imposing opposite directions of travel on the belts 4 (and directed outward from the assembly 1) it is possible to form two windrows A at the sides of the assembly 1, which are constituted by the entire mass of grass distributed over the portion of surface progressively passed over by the assembly 1 and by the drive unit B. Alternatively, by imposing the same direction of travel on the belts 4, it is possible to form a single windrow A on one selected side of the assembly 1.

In such situation, by bringing the pick-up drums 6 to the working position (as shown in Figure 8), it is possible to widen the pickup front (the band of ground affected instant by instant by the activity of picking up), thus increasing the productivity of the assembly 1 and reducing the time necessary for the formation of the windrows A.

From such active condition, it is possible to bring the belts 4 to the second configuration (as in Figure 9), in which they are partially staggered with respect to the corresponding rows of first teeth 7 and the end portion 4a protrudes externally, in a cantilever fashion, with respect to the space occupation of these latter items.

Thus by imposing mutually opposite directions on the belts 4 (directed inward), it is possible to deposit the grass picked up in the space defined between the belts 4 that are spaced apart (which constitutes the region E) and form, during the advancement of the assembly 1, a single, substantially "central" windrow A, which is located along the axis of symmetry of the assembly 1.

Such central windrow A is formed by the entire mass of grass distributed over the portion of surface affected by the assembly 1, since by keeping the first teeth 7 in contact it is possible to pick up the grass found along the path of advancement E and let it fall behind them (in the previously-mentioned space), whereas the remaining grass is picked up by the first teeth 7 and moved by the belts 4, which accumulate it on the other grass, thus forming the windrow A.

In precisely such condition the possibility of using the pick-up drums 6 is found to be of particular interest: in fact, by bringing them into the working position (as shown in Figure 9), and as has already been shown above, they end up in front of the end portions 4a which protrude from the belts 4. Therefore, in addition to the pickup front being naturally, and conveniently, enlarged, the pick-up drums 6 can intercept and lift those agricultural products that otherwise could come into direct contact with the belt 4, or its supporting components, thus causing jams or malfunctions.

Naturally, by keeping the active condition described in the previous paragraph, it is possible to invert the directions of rotation of the two belts 4, in order to deposit the grass on the sides of the assembly 1, thus forming two parallel windrows A.

Thus it has been shown that the improved assembly 1 offers the possibility of providing innumerable working conditions, forming one central windrow A or two windrows A on the sides of the assembly 1, thus ensuring great versatility and the movement of the entire mass of previously-cut agricultural products (when the belt 4 is in the second configuration).

The pick-up drums 6 offer protection against jams and at the same time increase the width of the band of ground from which the agricultural products can be lifted and moved, thus ensuring high productivity.

Moreover, in order to facilitate travel by road, the possibility of bringing the pick-up drums 6 into the resting position makes it possible to reduce the vertical space occupation.

Such context also highlights the possibility of raising the belts 4, the pick-up drums 6 (be they in the working position or in the resting position) and the elements 3, since it reduces the transverse space occupation. In such condition in fact, by arranging the pick-up drums 6 in the resting position, the vertical space occupation is also effectively contained and this is of undoubted interest for travel on urban or suburban roads.

Also, the presence of the elastic element 29 ensures the optimal balancing of the improved assembly 1, which can thus operate correctly, with high productivity, even in proximity to ditches and on appreciably uneven terrain.

The invention, thus conceived, is susceptible of numerous modifications and variations, all of which are within the scope of the appended claims. Moreover, all the details may be substituted by other, technically equivalent elements.

For example, it is possible to provide improved assemblies in which the transmission of motion to the elements 3, and to the pick-up drums 6, is obtained in a different way (for example hydraulically, as in many machines of the conventional type), while remaining within the scope of protection claimed herein.

In the embodiments illustrated, individual characteristics shown in relation to specific examples may in reality be substituted with other, different characteristics, existing in other embodiments.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. An improved assembly for the movement and transport of agricultural products, of the type of grass, hay, forage, grain, maize, and the like, cut and distributed on the ground, comprising a chassis (2) that can be coupled to a drive unit (B) and is associated with elements for lifting and placing (3) the agricultural products onto at least one conveyor belt (4), which faces and is proximate to said elements (3), in order to move the agricultural products in an operating direction (C), which is substantially transverse with respect to the predefined advancement direction (D), and deposit them in a predefined region (E), said chassis (2) being functionally associated with means of varying (5) the position of the entire belt (4) along said operating direction (C), in order to move it between at least one first configuration, in which said belt (4) substantially faces said elements (3) over its entire length, and at least one second configuration, in which an end portion (4a) of said belt (4) protrudes externally from the transverse space occupation of said elements (3), **characterized in that** it comprises at least one movable auxiliary pick-up drum (6), which faces said end portion (4a) and is adjacent to said elements (3) in at least one working position thereof, for lifting the agricultural products and delivering them to said end portion (4a) of said conveyor belt (4), in said second configuration of said belt (4).

2. The improved assembly according to claim 1, **characterized in that** said lifting and placing elements (3) comprise at least one row of rotating and mutually aligned first teeth (7), parallel to said operating direction (B), for lifting the agricultural products and delivering them on said belt (4).

3. The improved assembly according to one or more of claims 1 and 2, **characterized in that** it comprises two of said conveyor belts (4), which are mutually aligned along said operating direction (C), each one of said belts (4) facing and proximate to a respective row of said first teeth (7), which are mutually aligned and rotating, each one of said belts (4) and the respective row of said first teeth (7) being associated with said corresponding movable auxiliary pick-up drum (6).

4. The improved assembly according to one or more of the preceding claims, **characterized in that** said chassis (2) comprises a carriage (8) that can be coupled directly to the drive unit (B) and supports a power take-off (9), which can be associated with the drive unit (B), on the other side said carriage (8) being functionally associated with respective structures for supporting (10) said belts (4), said corresponding elements (3) and said related pick-up drums (6), each one of said supporting structures (10) comprising at least one first shaft (10a) that rotates in parallel to said operating direction (C) and supports, directly or indirectly, a respective row of said first teeth (7).

5. The improved assembly according to one or more of the preceding claims, **characterized in that** said at least one mobile auxiliary pick-up drum (6) comprises a supporting frame (11) for at least one row of second rotating teeth (12), said frame (11) being rotatably coupled to said supporting structure (10), for the selective movement of said at least one pick-up drum (6) from said working position to a resting position, in which said pick-up drum (6) is arranged to the rear of said respective belt (4) and of the corresponding row of said first teeth (7), and vice versa.

6. The improved assembly according to claim 5, **characterized in that** said supporting frame (11) of said at least one pick-up drum (6) comprises a contoured arm (13), which is pivoted at one of its end portions to said structure (10) and which rotatably supports, at the other end, a second rotating shaft (14), for supporting, directly or indirectly, the row of said second teeth (12) of said movable auxiliary pick-up drum (6).

7. The improved assembly according to one or more of the preceding claims, **characterized in that** it comprises an apparatus for the mechanical transmission of the power dispensed by the drive unit (B), said apparatus comprising a plurality of intermediate transmission shafts (15), which are interposed between said power take-off (9) and said at least one first shaft (10a), for its rotation in parallel to said operating direction (C), said intermediate shafts (15) being mutually connected by respective joints and/or transmission belts (16), which are wound around respective pulleys (17) that are supported by said intermediate shafts (15), and/or bevel gears (18).

8. The improved assembly according to claim 7, **characterized in that** said mechanical transmission apparatus comprises at least one coupling that can be actuated automatically when said respective pick-up drum (6) has reached said working position, for the rigid connection between said first shaft (10a) which supports the row of said first teeth (7) and said corresponding second shaft (14) which supports the row of said second teeth (12).

9. The improved assembly according to claim 8, **characterized in that** said at least one coupling comprises at least one crest (19), protruding axially from the head of said first shaft (10a), and directed outward, when said respective pick-up drum (6) has reached said working position at least one portion of the lateral surface of said at least one crest (19) abutting against a shoulder (20) that protrudes from said respective second shaft (14), for the automatic entrainment in rotation of said second shaft (14) as a consequence of the rotation of said first shaft (10a), said coupling comprising at least one transverse pin (21) which is normally coupled to said supporting structure (10) and can be stably inserted, when said respective pick-up drum (6) has reached said working position, into a corresponding sheath (22), which is rigidly supported by said pick-up drum (6).

10. The improved assembly according to one or more of the preceding claims, **characterized in that** said coupling comprises a central pivot (24), protruding axially from said second shaft (14), when said respective pick-up drum (6) has reached said working position, said central pivot (24) being automatically insertable into a respective orifice (25) that is defined along said head, coaxially with said first shaft (10a), for the centering of said second shaft (14) with respect to said first shaft (10a).

11. The improved assembly according to one or more of the preceding claims, **characterized in that** said carriage (8) is functionally associated with each one of said supporting structures (10) by way of respective supporting arms (26), which are pivoted to said carriage (8) and rotate, about a first rotation axis (F) that is parallel to the advancement direction (D), for the movement of said respective belt (4), of the corresponding row of said first teeth (7) and of said related pick-up drum (6), from an arrangement that is substantially horizontal and proximate to the ground, for the lifting, movement, and deposit in the predefined region (E) of agricultural products, to an arrangement that is substantially raised, in order to contain the overall space encumbrance, and vice versa.

12. The improved assembly according to one or more of the preceding claims, **characterized in that** each one of said supporting structures (10) comprises a profiled element (27), articulated to said respective supporting arm (26) about a second rotation axis (G), substantially parallel to said first rotation axis (F), said profiled element (27) being at the other end rotatably coupled, about a third rotation axis (H), substantially parallel to said second rotation axis (G), to a reticular framework (28) for supporting said respective first shaft (10a) and said corresponding second shaft (14).

13. The improved assembly according to claim 12, **characterized in that** an elastic element (29) is interposed between each one of said profiled elements (27) and said respective framework (28), the elastic reaction of said elastic element (29) opposing any free rotation of said framework (28) about said third axis (H), due to the weight of said pick-up drum (6).

14. The improved assembly according to claim 13, **characterized in that** said elastic element (29) is constituted substantially by at least one compression spring (30), fixed with one of its ends to said respective profiled element (27) and, at the opposite end, to said corresponding framework (28), at the end opposite to said corresponding pick-up drum (6).

15. The improved assembly according to one or more of the preceding claims, **characterized in that** said framework (28) of each one of said supporting structures (10) defines a pair of guide rails (31) for said respective belt (4), which are arranged in said operating direction (C), said variation means (5) comprising at least one corresponding piston (32) that is rigidly coupled to said corresponding belt (4) and can slide along a guide cylinder (33), parallel to said respective rails (31), and is fixed, on the side opposite to the piston (32), to said framework (28).
